# EUROPEAN PATENT APPLICATION

(11) **EP 1 582 987 A1**
(43) Date of publication of application: **05.10.2005**
(21) Application number: 03768389.3
(22) Date of filing: 26.12.2003
(51) Int. Cl.: G06F 13/00

(54) **INFORMATION DELIVERING APPARATUS AND INFORMATION DELIVERING METHOD**

(30) Priority: 07.01.2003 JP 2003001251
(71) Applicant: MATSUSHITA ELECTRIC INDUSTRIAL CO., LTD., Kadoma-shi, Osaka 571-8501 (JP)
(72) Inventor: MATSUURA, Satoshi, Kyotanabe-shi, Kyoto 610-0331 (JP); KUDO, Takahiro, Katano-shi, Osaka 576-0021 (JP); NAITO, Eiichi, Yawata-shi, Kyoto 614-8297 (JP); YOSHIDA, Hideyuki, Kyotanabe-shi, Kyoto 610-0343 (JP); OZAWA, Jun, Nara-shi, Nara 631-0005 (JP)
(74) Representative: Grünecker, Kinkeldey, Stockmair & Schwanhäusser Anwaltssozietät
(86) International application number: PCT/JP2003/017086
(87) International publication number: WO 2004/061683

(57) **Abstract**

A movement history of the user is transmitted from each of a plurality of terminals (11) owned by the user to a movement history management server (13). The server (13) filters display-conditioned information received from an information provider terminal (14) by referring to the display conditions of the information and the stored user's movement histories, to specify display-conditioned information to be transmitted, and transmits the specified information to the user.

## Description

### TECHNICAL FIELD

The present invention belongs to a technology related to information distribution via a network.

### BACKGROUND ART

Some proposals have conventionally been made as to techniques of acquiring position information from a terminal owned by a user and distributing information related to an area around the acquired position information to the user. These techniques have an advantage of saving the user from having to select information since any information judged irrelevant to the user is removed in advance using the position information.

For example, there are known an information distribution system in which area-to-area advertisement information registered in advance is read based on position information acquired from a GPS-mounted mobile phone and transmitted to the mobile phone (see Patent Literature 1, for example), and an information distribution system in which object users to which information should be distributed are narrowed using a database having position information transmitted from mobile phones recorded as respective action histories (see Patent Literature 2, for example).

Also, already known are a technique of determining information to be distributed to a user based on the action pattern extracted from the movement history of the user's terminal and a distribution target condition (see Patent Literature 3), a technique of extracting user's action characteristic information from the use status of the user's terminal to determine the contents and type of information to be acquired (see Patent Literature 4), and a technique of distributing information provided with distribution conditions and presentation conditions to enable presentation of the information in an appropriate order on the terminal side (see Patent Literature 5).
(Patent Literature 1) Japanese Laid-Open Patent Publication No. 2001-217789 (FIG. 1)
(Patent Literature 2) Japanese Laid-Open Patent Publication No. 2002-149529 (FIG. 2)
(Patent Literature 3) Japanese Laid-Open Patent Publication No. 2002-342367
(Patent Literature 4) Japanese Laid-Open Patent Publication No. 2001-182851
(Patent Literature 5) Japanese Laid-Open Patent Publication No. 11-250134

### Problems to be solved

The prior art techniques, including Patent Literature 1 and 2 described above, assume use of one terminal among mobile terminals such as mobile phones, PDAs and car navigation systems.

Actually, however, many users own a plurality of mobile terminals. For example, a user may carry a mobile phone during commuting to and from his or her office, use a PDA in the office and drive a car equipped with a car navigation system. For such a user using a plurality of mobile terminals, the prior art techniques do not allow use of movement histories acquired at the respective mobile terminals in a unified way, and therefore do not necessarily succeed in grasping the action ranges and action pattern of the user accurately. Also, from the standpoint of an information provider, it is necessary to be always aware of the type of the mobile terminal of the user to which information is to be distributed, and therefore, easy information distribution is difficult.

In Patent Literature 1 described above, in which a mobile terminal notifies a server of its current position at constant intervals and downloads related information from the server, communication with the server always occurs during use of the service. Therefore, if this system is applied to a mobile phone and the like, the service user will have to pay not a small communication charge. In view of this, use of mobile terminals as advertisement media, in particular, is inappropriate. Moreover, in this system, the user must intentionally put his or her terminal in the service usable state. For example, GPS of the terminal must be kept ON and access to a specific site must be maintained. Therefore, this system is not necessarily high in convenience.

### DISCLOSURE OF THE INVENTION

An object of the present invention is providing an information distribution system in which information can be distributed to correspond to the user's action more accurately than conventionally done.

Specifically, the information distribution device or method of the present invention includes: receiving from a plurality of terminals owned by a user movement histories of the user and use histories of the terminals and storing the received histories in a movement history database; receiving display-conditioned information provided with display conditions including an area condition and a timing condition from an information provider and storing the received information in an information storing section; filtering the display-conditioned information stored in the information storing section by comparing an action area of the user obtained from the movement histories stored in the movement history database with the area condition, to specify display-conditioned information to be transmitted, and transmitting the specified information to the user; and determining a terminal among the plurality of terminals that satisfies the timing condition of the specified display-conditioned information, by referring to the use histories stored in the movement history database, and transmitting the display-conditioned information to the terminal.

According to the present invention, the movement histories of the user and the use histories of the terminals owned by the user are stored in the movement history database. Display-conditioned information is filtered by comparing the area condition of the display-conditioned information with the action area of the user obtained from the movement histories stored in the movement history database, to specify display-conditioned information to be transmitted to the user. A terminal that satisfies the timing condition of the specified display-conditioned information is determined based on the use histories stored in the movement history database, and the display-conditioned information is transmitted to the determined terminal. In this way, information obtained by narrowing based on the area condition and the user's movement history is transmitted to a terminal that satisfies the timing condition. Accordingly, information high in necessity for the user can be distributed to the user at accurate timing.

### BRIEF DESCRIPTION OF THE INVENTION

FIG. **1** is a block diagram showing the entire arrangement of an information distribution system of an embodiment of the present invention.
FIG. **2** is a view showing major modules mounted in separate devices in the system of FIG. **1.**
FIG. **3** is a block diagram of a user agent manager and a user agent in the embodiment of the present invention.
FIG. **4** is an example of display-conditioned information.
FIG. **5** is an example of data stored in a movement history database.
FIG. **6** is a flowchart showing an operation of the components of FIG. **3** performed when display-conditioned information is transmitted.
FIG. **7** is a flowchart showing an operation of the components of FIG. **3** performed in communication with a mediator.
FIG. **8** is a block diagram of a device agent in the embodiment of the present invention.
FIG. **9** shows an example of position data recorded in a movement history storing section.
FIG. **10** is a block diagram of the mediator in the embodiment of the present invention.
FIG. **11** is a flowchart showing operations of the device agent of FIG. **8** of accumulating data as a movement history and transmitting the stored movement history to the mediator.
FIG. **12** is a flowchart showing an operation of the device agent of FIG. **8** of displaying display-conditioned information.
FIG. **13** shows an example of display screen given when the mobile terminal is a mobile phone.
FIG. **14** is a flowchart showing an operation of the mediator of FIG. **10.**
FIG. **15** is a block diagram of a service concierge in the embodiment of the present invention.
FIG. **16** is a flowchart showing an operation of the service concierge of FIG. **15.**
FIG. **17** shows an example of screen for entry of display conditions.
FIG. **18** is a flowchart of processing of registering a mobile terminal.
FIG. **19** shows examples of display screens given when the processing of FIG. **18** is performed with a mobile phone.
FIG. **20** shows an example of maintenance and filtering of display-conditioned information.
FIG. **21** shows an example of information notification performed in liaison between mobile terminals.
FIG. **22** shows an example of information provision performed in liaison between a plurality of information terminals.
FIG. **23** is a block diagram of the user agent manager and the user agent adopted when a plurality of information terminals are placed in liaison.
FIG. **24** is a flowchart showing an operation of the agent manager of FIG. **23.**
FIG. **25** is a flowchart showing an operation of the user agent of FIG. **23.**
FIG. **26** shows an example of rule for determining a terminal to which information is to be transmitted based on the timing condition.
FIG. **27** shows an example of terminal selection according to the rule of FIG. **26.**

### BEST MODE FOR CARRYING OUT THE INVENTION

Hereinafter, an embodiment of the present invention will be described with reference to the relevant drawings.

### <Entire arrangement>

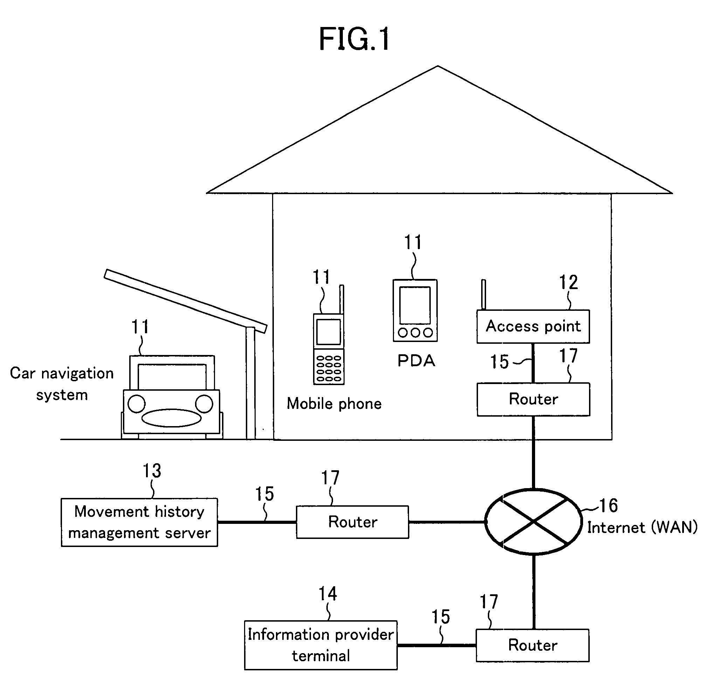

FIG. **1** is a block diagram showing the entire arrangement of an information distribution system of an embodiment of the present invention. Referring to FIG. **1,** the reference numeral **11** denotes a mobile terminal such as a mobile phone, a car navigation system and a PDA, **12** denotes an access point accessible to a WAN (wide area network) having an interface for communication with the mobile terminal **11, 13** denotes a movement history management server for receiving and managing a movement history transmitted from the mobile terminal **11, 14** denotes an information provider terminal with which an information provider distributes information, **15** denotes a LAN (local area network), **16** denotes a WAN (the Internet), and **17** denotes a router for connecting the LAN **15** to the WAN **16.** The router **17** may be provided with a corresponding modem function when the necessity arises such as when ADSL (asymmetric digital subscriber line) or FTTH (fiber to the home) is used for the access to the WAN **16,** for example. Information distributed from the information provider terminal **14** is once stored in the movement history management server **13** and then distributed to any of the mobile terminals **11** according to the action of the user estimated from the movement history.

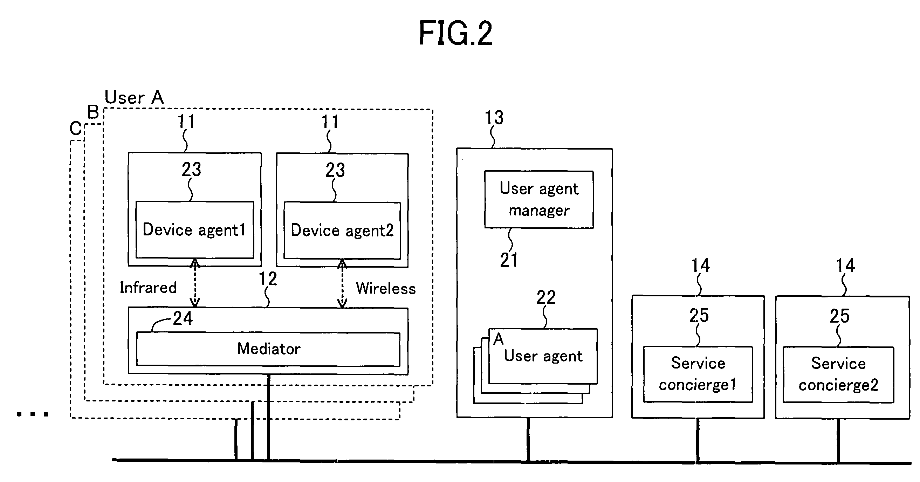

FIG. **2** is a view showing major modules mounted in the separate devices in the system of FIG. **1.** As shown in FIG. **2,** the movement history management server **13** has a user agent manager **21** for receiving information distributed from the information provider terminal **14** and a user agent **22** provided for each user for receiving movement histories transmitted at predetermined timing and managing the received movement histories in a unified way. The mobile terminal **11** has a device agent **23** for recording the user's movement history in a set of the position information and the time. The access point **12** has a mediator **24** for accepting access from the mobile terminal **11** and mediating data communication to the movement history management server **13.** The information provider terminal **14** has a service concierge **25** for providing an information service. In the illustrated example, assume that at least one mobile terminal **11** and at least one access point **12** exist for each user.

If the access point **12** functions as an access point of wireless LAN such as 802.11b and the mobile terminal **11** is configured to be directly accessible to the wireless LAN, the mobile terminal **11** may be provided with the function of the mediator **24,** in addition to the device agent **23.** If the user has a device having the data management function, such as a home server, in the house, the device may be provided with the function of the user agent **22** to operate in place of the movement history management server **13.** If the user has a device having the function equivalent to the access point **12,** such as a home gateway, in the house, the device may be provided with the function of the mediator **24.** In this way, the modules shown in FIG. **2** may be arranged appropriately according to the functions and configurations of the devices on the network.

The access point **12** may be placed, not only in the house, but also in an office and an area called a hot spot in which wireless LAN is available, for example, to permit shared use among a plurality of users.

Hereinafter, the configurations and operations of the modules will be described.

### <User agent and user agent manager>

### -Movement history management server-

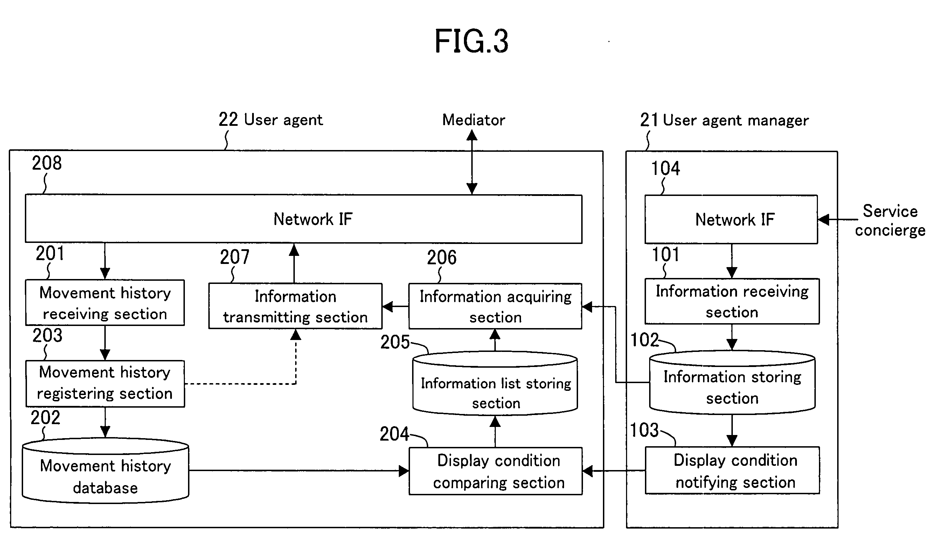

FIG. **3** is a block diagram of the user agent manager **21** and the user agent **22** of the movement history management server **13.** Referring to FIG. **3,** the user agent manager **21** includes: an information receiving section **101** for receiving display-conditioned information with display conditions added thereto, transmitted from the service concierge **25** of the information provider terminal **14;** an information storing section **102** for storing the received display-conditioned information; and a display condition notifying section **103** for notifying each user agent **22** of the display conditions given for the received display-conditioned information. The user agent manager **21** also includes a network interface (IF) **104** for communication with the service concierge **25.**

The user agent **22** includes: a movement history receiving section **201** for receiving a movement history transmitted from the device agent **23** of the mobile terminal **11;** a movement history database **202** for arranging the movement history from at least one device agent **23** in the time sequence and storing the resultant movement history; a movement history registering section **203** for registering the received movement history with the movement history database **202;** a display condition comparing section **2**0**4** for comparing the display conditions received from the user agent manager **21** with the movement history of the user stored in the movement history database **202;** an information list storing section **205** for storing in a list the identifier of display-conditioned information of which distribution to the user has been determined as a result of the comparison; an information acquiring section **206** for acquiring the information indicated by the identifier stored in the information list storing section **102** from the information storing section **102** of the user agent manager **21;** and an information transmitting section **207** for transmitting the acquired display-conditioned information to the mobile terminal **11.**

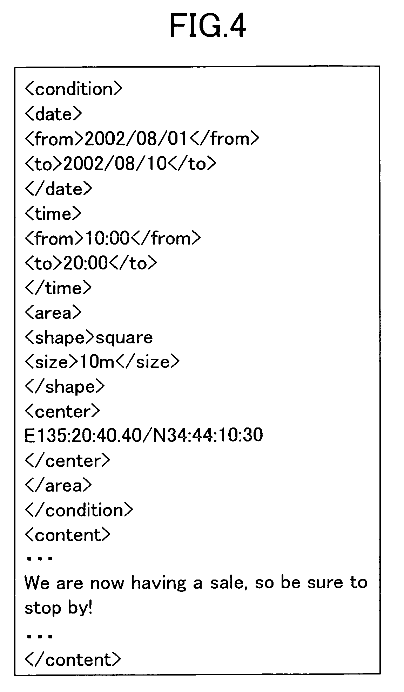

FIG. **4** is an example of display-conditioned information. The information of this example shown in FIG. **4** has display conditions that the user be present somewhere in the area of a 10 m-side square with its barycenter at 135 degrees 20 minutes 40.40 seconds east longitude and 34 degrees 44 minutes 10.30 seconds north latitude at a time in the time range of 10:00 to 20:00 on August 1 to 10, 2002.

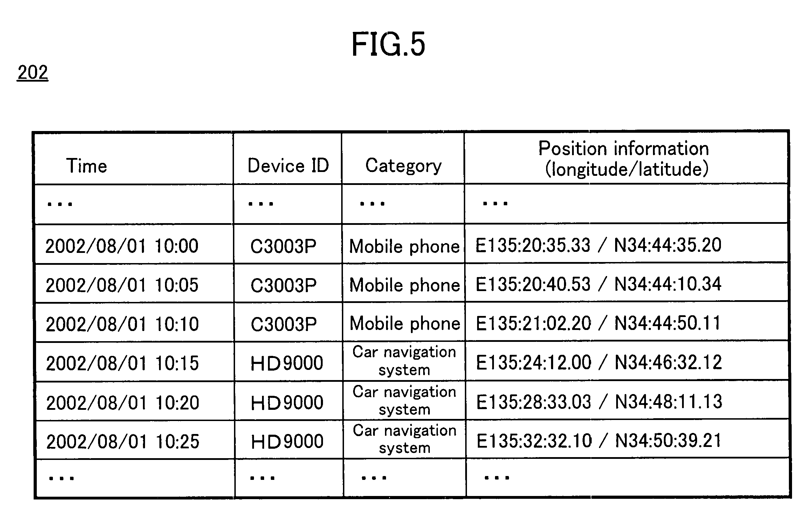

FIG. **5** is an example of data stored in the movement history database **202.** The data of FIG. **5** represents the movement history of a mobile phone and a car navigation system each registered as the mobile terminal **11** by the user. The procedure of registration of a device as the mobile terminal **11** will be described later.

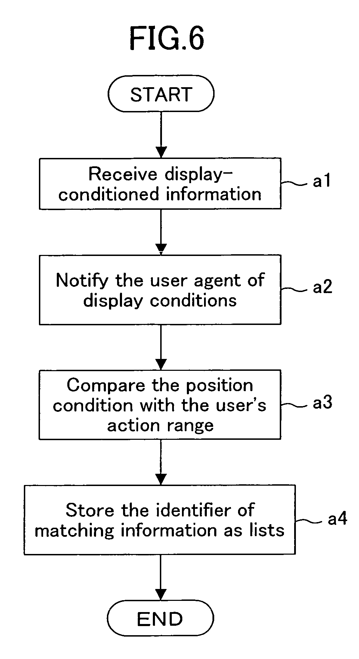

Hereinafter, the operation performed when display-conditioned information is transmitted from the service concierge **25** will be described with reference to the flowchart of FIG. **6.**

### (Step a1)

The information receiving section **101** of the user agent manager **21** receives display-conditioned information transmitted from the service concierge **25** and stores the information in the information storing section **102.**

### (Step a2)

The display condition notifying section **103** extracts display conditions given in the display-conditioned information stored in the information storing section **102** and notifies the user agent **22** of the display conditions. In this example, assume that the condition related to the position is extracted among the display conditions. In the example of FIG. **4,** extracted is the condition that the user be present somewhere in the area of a 10 m-side square with its barycenter at 135 degrees 20 minutes 40.40 seconds east longitude and **34** degrees 44 minutes 10.30 seconds north latitude at a time in the time range of 10:00 to 20:00.

### (Step a3)

The display condition comparing section **204** of each user agent **22** searches through the movement history database **202** based on the position condition extracted in step **a2** to examine whether or not this position condition is included in the user's past action ranges. The user's action ranges are estimated by analyzing the movement history of the user.

### (Step a4)

If the position condition is included in any of the user's past action ranges, the identifier of the display-conditioned information is stored in the information list storing section **205.** The device ID of the mobile terminal **11** that has transmitted the movement history including this action range is also stored together with the identifier.

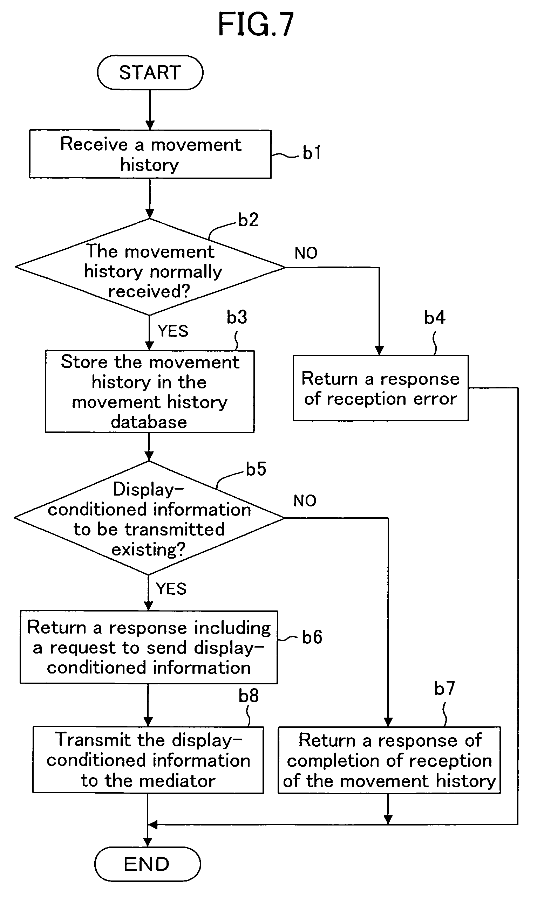

Next, the operation in communication with the mediator **24** will be described with reference to the flowchart of FIG. **7.**

### (Step b1)

The movement history receiving section **201** of the user agent **22** receives a movement history transmitted from the mediator **24.**

### (Step b2)

The movement history registering section 203 determines whether or not the movement history has been normally received. The process proceeds to step **b3** if normally received, or otherwise proceeds to step **b4.**

### (Step b3)

The movement history registering section **203** stores the movement history received in step **b1** in the movement history database **202.** The process then proceeds to step **b5.**

### (Step b4)

The information transmitting section **207** transmits a response message indicating a reception error to the mediator **24.** The process is then terminated.

### (Step b5)

The information acquiring section **206** acquires the display-conditioned information having the identifier stored in the information list storing section **205** from the information storing section **102** of the user agent manager **21** as the display-conditioned information to be transmitted. The process proceeds to step **b6** if there is display-conditioned information to be transmitted, or otherwise proceeds to step **b7**.

### (Step b6)

The information transmitting section **207** transmits a response message including a request to send display-conditioned information to the mediator **24.** The process then proceeds to step **b8.**

### (Step b7)

The information transmitting section **207** transmits a response message expressing completion of reception of the movement history to the mediator **24.** The process is then terminated.

### (Step b8)

The information transmitting section **207** transmits the display-conditioned information, together with the device ID, to the mediator **24.** That is, the display-conditioned information is selected and transmitted for each mobile terminal. The process is then terminated.

As described above, the user agent **22** collects movement histories from the device agents **23** of the multiple mobile terminals **11** owned by the user and manages the collected movement histories in a unified way. The user agent **22** then selects only information matching with the action ranges of the user among all display-conditioned information items distributed from the service concierge **25,** and transmits the selected one to the mediator **24.**

In other words, with the unified management of the movement histories obtained from the multiple mobile terminals **11** by the server **13,** the action ranges and action pattern of the user can be grasped more accurately, and this permits distribution of information high in necessity for the user obtained by precise narrowing of information. In addition, the information provider, who conventionally distributes information to individual platforms such as a car navigation system and a mobile phone, is relieved of considering to which terminal of which user information should be sent. Information can now be distributed to an appropriate terminal of the user satisfying the conditions quite easily.

Attribute information such as the age and sex of the user may be stored in the user agent **22,** and in step **a3,** the attribute information may be referred to, together with the position information, for filtering of information. The number of mobile terminals owned by the user may be one.

A typical travel route of the user, such as a route from the home to the office, may be extracted from the movement history database **202,** and arrangement may be made in advance so as to present information of which the display conditions designate a position overlapping the travel route when the user passes a certain point on the travel route. For example, for the user who will go to his or her office with high possibility when he or she leaves home toward the nearest station in the morning of a weekday, information of which the display conditions designate a position on the user's commuting route can be displayed when the user arrives at the nearest station. The extraction of a typical travel route from the movement history database **202** may be done in the follow way.
(1) A location in which the user stays within a predetermined area for a predetermined time is extracted as a target.
(2) A route connecting such targets is extracted using the position information of a major point serving as a midway point such as an intersection and a station.

### <Device agent and mediator>

### -Mobile terminal side-

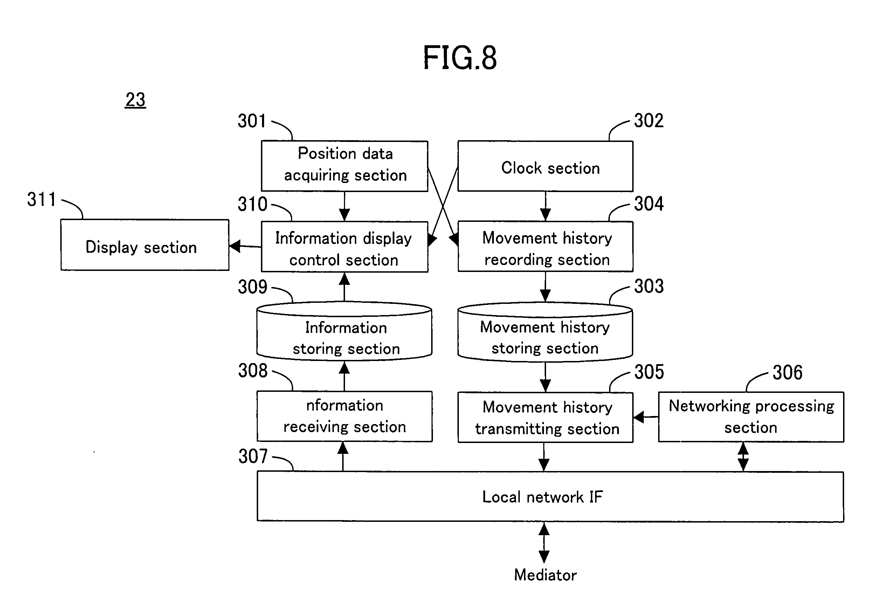

FIG. **8** is a block diagram of the device agent **23.** Referring to FIG. **8,** the reference numeral **301** denotes a position data acquiring section for acquiring coordinate values of the longitude and latitude of the position as position data, **302** denotes a clock section providing the current time, **303** denotes a movement history storing section for storing sets of time data and position data in the time sequence as movement history data, **304** denotes a movement history recording section for recording the position data acquired by the position data acquiring section **301** and the time data obtained by the clock section **302** as a set in the movement history storing section **303, 305** denotes a movement history transmitting section for transmitting the movement history data stored in the movement history storing section **303** to the mediator **24, 306** denotes a networking processing section for performing processing of connection with the access point **12** and notifying the movement history transmitting section **305** of completion of the connection, **307** denotes a local network IF for giving connection with the access point **12** by use of a 2.4 GHz band short-range wireless technology, **308** denotes an information receiving section for receiving display-conditioned information transmitted via the mediator **24, 309** denotes an information storing section for storing the display-conditioned information received by the information receiving section **308,** and **310** denotes an information display control section for retrieving information matching in display condition from the information storing section **309** based on the position data acquired by the position data acquiring section **301** and the clock data obtained by the clock section **302** and displaying the retrieved information to a display section **311.**

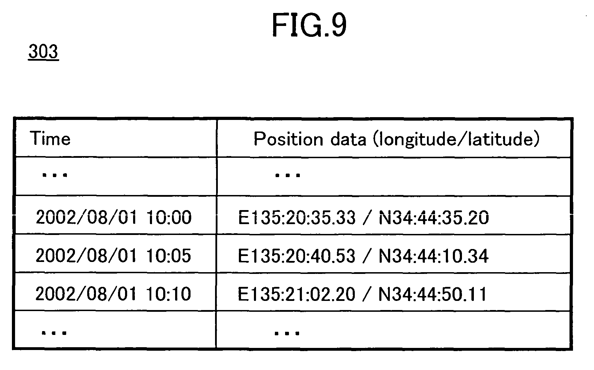

FIG. **9** shows an example of position data stored in the movement history storing section **303.** Note that the position data may be acquired by any of known technologies such as using GPS (global positioning system), using the intensity of a radio wave from the reference position such as a base station, and using the position information transmitted from a local radio station. If the position data is changeable to latitude/longitude coordinate values, the position data may be expressed with another coordinate system or labels such as addresses.

As the local network IF **307,** a wired network such as RS232C and USB and infrared communication typified by IrDA may be used, in place of the short-range wireless technology, depending on the usability of the mobile terminal **11.** For example, if the mobile terminal **11** is a PDA, a cradle connected to the access point **12** via USB may be used. If the mobile terminal **11** is a car navigation system, wireless connection with the access point **12** may be attained using 802.11b when the car is stopped in a parking space. Otherwise, infrared OBEX (object exchange) may be used to transmit the movement history from a car navigation system or the like to the access point **12** by way of a mobile phone, to be finally transmitted to the movement history server **13.**

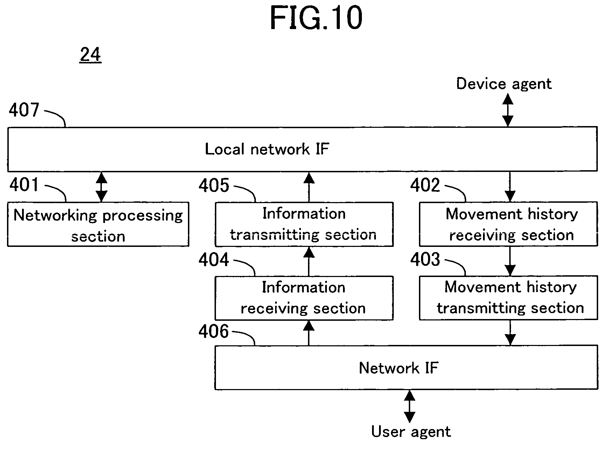

FIG. **10** is a block diagram of the mediator **24,** which mediates communication between the device agent **23** and the user agent **22.** Referring to FIG. **10,** the reference numeral **401** denotes a networking processing section for performing processing of connection with the mobile terminal **11, 402** denotes a movement history receiving section for receiving a movement history transmitted from the device agent **23, 403** denotes a movement history transmitting section for transmitting the received movement history to the movement history management server **13, 404** denotes an information receiving section for receiving display-conditioned information transmitted from the movement history management server **13**, **405** denotes an information transmitting section for transmitting the received display-conditioned information to the device agent **23, 406** denotes a network IF for giving connection to the WAN **16,** and **407** denotes a local network IF for communication with the device agent **23.**

The operation of the device agent **23** of FIG. **8** will be described.

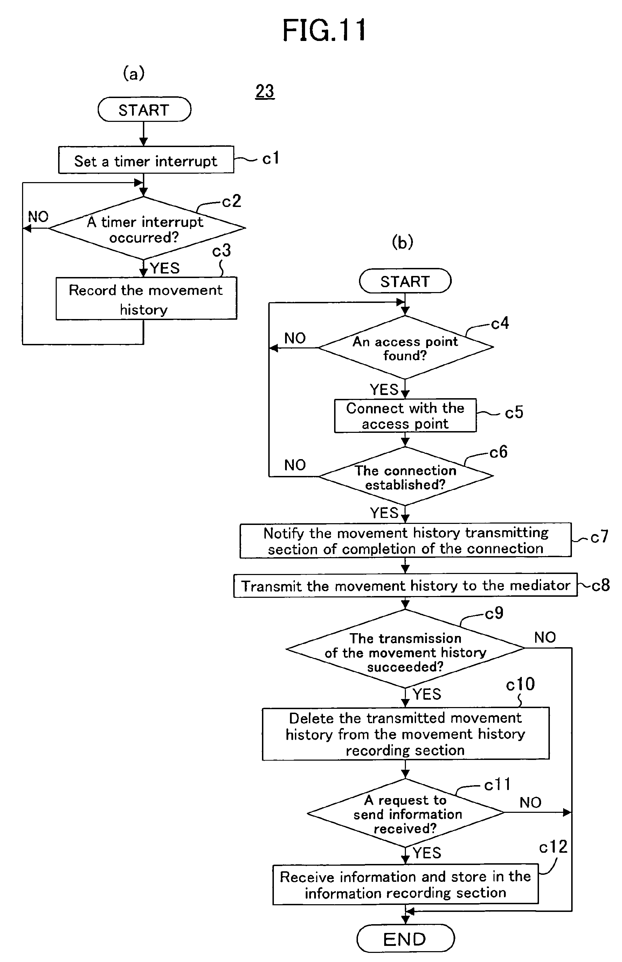

First, the operation of accumulating data as a movement history will be described with reference to the flowchart of FIG. **11(a).** Herein, as the simplest method, the case of recording the current position at fixed intervals will be described.

### (Step c1)

Setting is made so that a timer interrupt occurs at fixed intervals, such as every five minutes, for example.

### (Step c2)

The movement history recording section **304** examines whether or not a timer interrupt has occurred. The process proceeds to step **c3** if a timer interrupt has occurred, or otherwise waits until a timer interrupt occurs.

### (Step c3)

The movement history recording section **304** receives position data from the position data acquiring section **301** and also reads the current time from the clock section **302,** to record both of them in the movement history storing section **303.** As a result, data as shown in FIG. **9** is accumulated as the movement history. The process then returns to step **c2.**

Next, the operation of transmitting the accumulated movement history to the mediator **24** will be described with reference to the flowchart of FIG. **11(b).**

### (Step c4)

The networking processing section **306** attempts to detect a query signal from the access point **12** to find out the access point **12.** The process proceeds to step **c5** if a query signal has been detected. Otherwise, the processing is continued.

### (Step c5)

The networking processing section **306** returns a response signal to the access point **12** in response to the detection of the query signal, and performs processing of connection with the access point **12** according to a predetermined protocol.

### (Step c6)

If the connection is established, the process proceeds to step **c7.** Otherwise, the process returns to step **c4** to attempt to detect a query signal from the access point **12.**

### (Step c7)

The networking processing section **306** notifies the movement history transmitting section 305 of completion of the connection.

### (Step c8)

The movement history transmitting section **305** reads the movement history from the movement history storing section **303** and transmits the read movement history to the mediator **24.**

### (Step c9)

The movement history transmitting section **305** waits for a response from the mediator **24.** If a response including an error message is returned, or no response is returned for a predetermined duration, error processing is done and the operation is terminated. Otherwise, the transmission of the movement history is determined successful, and the process proceeds to step **c10**.

### (Step c10)

The movement history transmitting section **305** deletes the transmitted movement history from the movement history storing section **303.**

### (Step c11)

The movement history transmitting section **305** examines whether or not the response includes a request to send display-conditioned information from the mediator **24.** If yes, the process proceeds to step **c12**. Otherwise, the operation is terminated.

### (Step c12)

The information receiving section **308** receives display-conditioned information as shown in FIG. **4** from the mediator **24** and records the received information in the information storing section **309.**

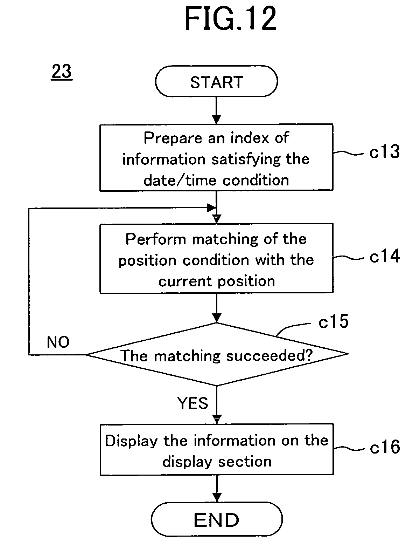

Next, the operation of displaying the display-conditioned information stored in the information storing section **309** will be described with reference to the flowchart of FIG. **12.**

### (Step c13)

The information display control section **310** examines the display date/time condition for the display-conditioned information stored in the information storing section **309,** lists only information of which the display date/time condition will be satisfied within six hours from the current time, for example, and prepares in advance an index including the display position condition for the listed information. Assume in this example that this processing is executed every six hours. This reduces the number of information items to be subjected to matching processing, and thus the efficiency of matching processing can be enhanced.

### (Step c14)

The information display control section **310** reads the position data from the position data acquiring section **301** in a predetermined cycle, and performs matching of the read position data with the display position condition of each index prepared in step **c13.** Assume in this example that matching is considered successful if the current position data is somewhere within a 10 m-side square area with the position specified as the display position condition in the center of its diagonals.

### (Step c15)

If the matching is successful in step **c14**, the process proceeds to step **c16.** Otherwise, step **c14** is repeated.

### (Step c16)

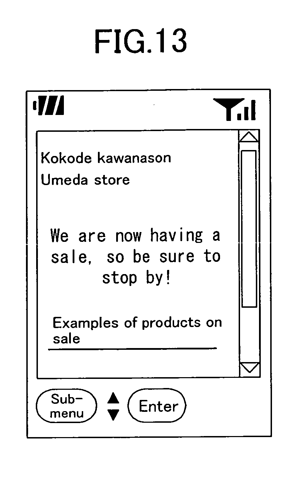

The information display control section **310** displays the successfully matched display-conditioned information on the display section **311.** FIG. **13** shows an example of display screen that may be given when the mobile terminal **11** is a mobile phone.

As already described with reference to the user agent **22,** the display-conditioned information transmitted to the device agent **23** is the one that has been selected among others distributed from the information provider because the display conditions thereof match with the user's action range estimated from the movement history database **202.**

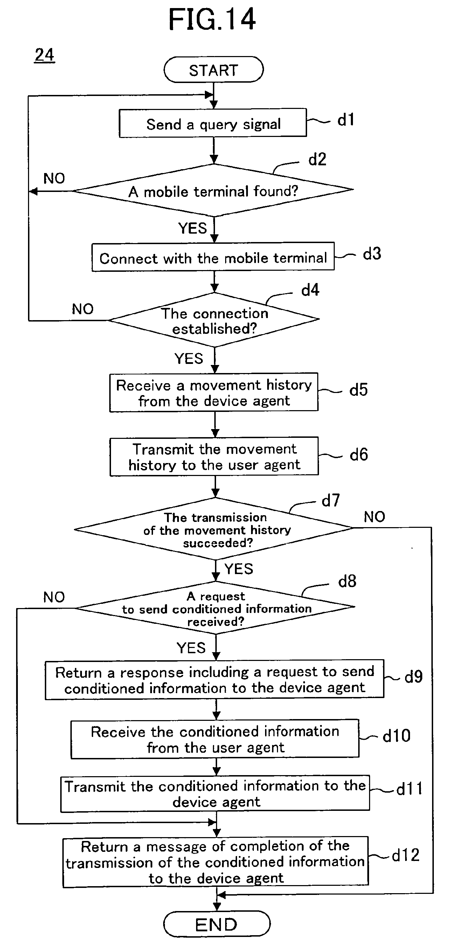

Next, the operation of the mediator **24** of FIG. **10** will be described with reference to the flowchart of FIG. **14.**

### (Step d1)

The networking processing section **401** sends a query signal at predetermined intervals.

### (Step d2)

The networking processing section **401** attempts to detect a response signal from the mobile terminal **11.** If a response signal is detected, the process proceeds to step **d3.** Otherwise, the process returns to step **d1** to sends a query signal again.

### (Step d3)

Processing of connection with the mobile terminal **11** is performed according to a predetermined protocol.

### (Step d4)

If the connection is established, the process proceeds to step **d5.** Otherwise, the process returns to step **d1** to sends a query signal again.

### (Step d5)

The movement history receiving section **402** receives a movement history transmitted from the device agent **23.**

### (Step d6)

The movement history transmitting section **403** transmits the movement history received by the movement history receiving section **402** to the user agent **22.**

### (Step d7)

A response from the user agent **22** is waited. If a response including an error message is returned, or no response is returned for a predetermined time period, error processing is done and the operation is terminated. Otherwise, the process proceeds to step **d8.**

### (Step d8)

Whether or not the response includes a request to send display-conditioned information is examined. If yes, the process proceeds to step **d9.** Otherwise, the process proceeds to step **d12.**

### (Step d9)

The information transmitting section **405** transmits a response message including a request to send display-conditioned information to the device agent **23.**

### (Step d10)

The information receiving section **404** receives the display-conditioned information transmitted from the user agent **22.**

### (Step d11)

The information transmitting section **405** transmits the display-conditioned information received by the information receiving section **404** to the device agent **23.** The operation is then terminated.

### (Step d12)

The information transmitting section **405** returns a message indicating completion of transmission of the movement history to the device agent **23.** The operation is then terminated.

In the manner described above, the mediator **24** mediates communication between the device agent **23** and the user agent **22** in transmission of the movement history and display-conditioned information. That is, with the work of the mediator **24,** the mobile terminal **11** can upload the movement history and download information via its local input/output. In other words, mobile terminals having an arrangement for any one among wireless connection such as infrared communication and Bluetooth, wired connection such as USB and IEEE 1394 and data exchange with a semiconductor memory such as an SD card can adopt the method of this embodiment.

As described above, it is possible for the mobile terminal **11** to upload the movement history and also download display-conditioned information selected considering the movement history from the movement history management server **13,** by use of the access point **12** placed inside the house and the like. In the mobile terminal **11,** the display-conditioned information received by the information receiving section **308** is stored in the information storing section **309.** Once the position data acquired by the position data acquiring section **301** satisfies the display conditions for the information, the information is displayed on the display section **311** by the information display control section **310.** In this way, information selected considering the user's current position can be presented to the user at appropriate timing without the necessity of real time communication with the server at the use of the information.

A link to a predetermined Web page may be included in the information displayed, to enable the user to operate to acquire detailed information or updated information. The cycle of preparation of the index may be set freely depending on the memory capacity and CPU performance of the mobile terminal. The shape and size of the area for successful matching may be set arbitrarily. It is also needless to mention that two or more positions may be designated as the display condition for one information item.

If the mobile terminal **11** and the movement history management server **13** can be in direct communication with each other under a common protocol such as IP (Internet protocol), the mediator **24** may be omitted.

In the future, the following information use pattern is expected to become mainstream. That is, unviewed information, among information items received at a home server, is transferred to a mobile terminal to enable viewing of the information with the terminal. For example, in a stand-alone house, in particular, communication becomes available between a car navigation system mounted in a car parked in a garage and a home server via wireless LAN.

In the above case, however, a problem arises on the timing of the transfer of information. For example, when the engine of the car is stopped, at which the power of the car navigation system is normally off, no communication is available between the home server and the car navigation system, failing in transfer of information.

Some measures may be taken to solve the above problem. For example, the car navigation system may be made to automatically start up with a timer before the departure by predicting the driving departure time from the past use history, to enable transmission of a request to receive information to the home server. Otherwise, the car navigation system may be made to automatically start up in response to open/close of the door of the car, to enable transmission of a request to receive information to the home server.

As measures from another standpoint, the home server may notify a mobile phone of completion of information transfer (data synchronization) to the car navigation system by mail. Otherwise, the car navigation system may be kept ON for a predetermined time period after the engine of the car is stopped in the vicinity of the house of the user, to enable the car navigation system to transfer movement history information to the home server. The transfer of information may be made after the parking brake is applied.

### <Service concierge>

### ...Information provider terminal

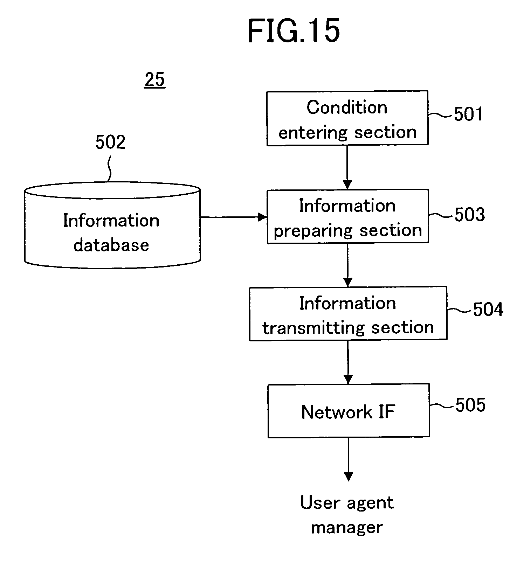

FIG. **15** is a block diagram of the service concierge **25.** Referring to FIG. **15,** the reference numeral **501** denotes a condition entering section for entering display conditions for display of information, **502** denotes an information database for accumulating information to be transmitted, **503** denotes an information preparing section for preparing display-conditioned information by giving the entered display conditions to information stored in the information database **502** via the condition entering section **501, 504** denotes an information transmitting section for transmitting the display-conditioned information prepared by the information preparing section **503** to the user agent manager **21,** and **505** is a network IF for communication with the user agent manager **21.**

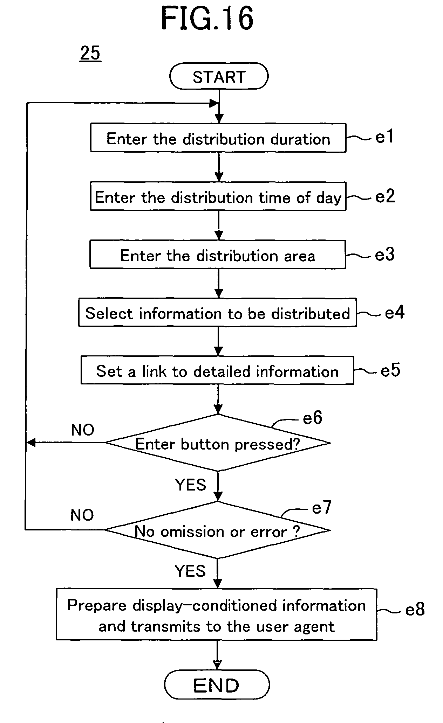

The operation of the service concierge **25** of FIG. **15** will be described with reference to the flowchart of FIG. **16.**

### (Steps e1 to e5)

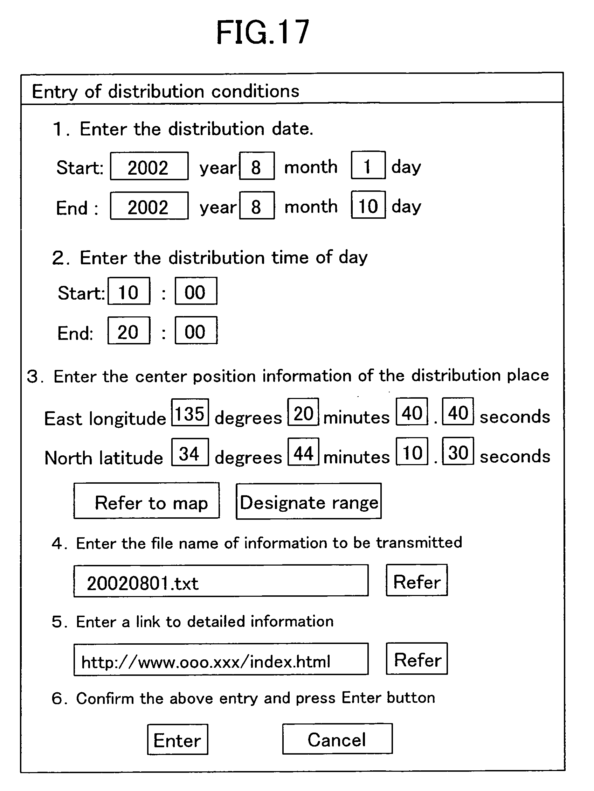

An entry screen as shown in FIG. **17** is displayed for entry of display conditions. The information provider enters display conditions.

First, the information provider designates the duration of distribution (**e1**). If the information is related to a sale and the like, the period of the sale is entered. The time of day for distribution is then set **(e2).** If it is desired to distribute information considering the open hours of the store and the like, for effective calling in, the time of day is set. This setting of the time of day is not necessarily required. The area of the distribution is then set **(e3).** Entered here are the latitude and longitude of the center of the area, as well as the shape and size of the area (100 m radius circle, for example) by pressing "Designate range" button. If the latitude and longitude of the area to be designated are unknown, "Refer to map" button may be pressed to designate the position on the map.

The information to be distributed is then selected **(e4).** An information file stored in the information database **502** is selected by pressing "Refer" button. A link to detailed information is then designated **(e5).** Since information is not distributed in real time, real-time information such as the remaining number of commodities and time service may be given in a linked site. Setting of the linked site is not necessarily required.

### (Step e6)

The condition entering section **501** examines whether or not "Enter" button has been pressed. If the "Enter" button has been pressed, the process proceeds to step **e7.** Otherwise, the entry of distribution conditions is continued.

### (Step e7)

The condition entering section **501** checks for an omission and an error in the entry. If no omission or error is found, the process proceeds to step **e8.** Otherwise, the entry of distribution conditions is continued. For example, in the case that the presentation period of information is determined under the contract conditions of the service, check is made for whether or not the distribution period has been correctly set in the light of the information presentation period.

### (Step e8)

The information preparing section **503** automatically prepares display-conditioned information as shown in FIG. **4** based on the entered display conditions. The information transmitting section **504** transmits the prepared display-conditioned information to the user agent **22.** The operation is then terminated.

As described above, the information provider can prepare display-conditioned information and transmits the information to the user agent manager **22** only by setting the conditions according to the guidance on the screen. If designation of a plurality of position conditions is desired, the condition entry screen may be arranged to allow designation of a plurality of locations. For prevention of information distribution from an unauthorized third party, a unique encryption key may be provided for each service concierge **25,** to allow digital signature of the service provider on the display-conditioned information.

### <Registration of mobile terminal>

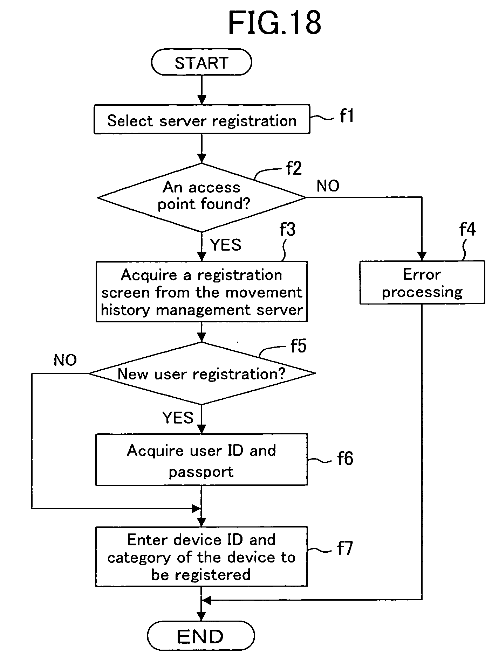

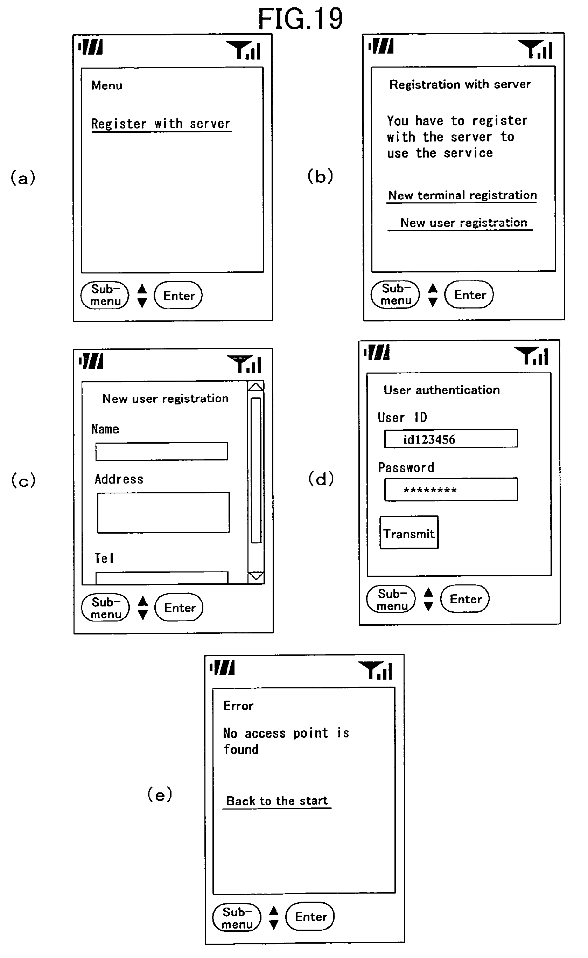

The processing of registering the mobile terminal **11** with the movement history management server **13** will be described. Herein, an example of registering a mobile phone will be described with reference to the flowchart of FIG. **18** and the display screens in FIG. **19.**

### (Step f1)

"Register with server" is selected from a menu screen as shown in FIG. **19(a)**.

### (Step f2)

The mobile phone searches for the access point **12.** The process proceeds to step **f3** if the access point **12** is found, or otherwise proceeds to step **f4.**

### (Step f3)

The mobile phone accesses the movement history management server **13,** and acquires and displays a registration screen as shown in FIG. **19(b).**

### (Step f4)

An error message as shown in FIG. **19(e)** is displayed, and the processing is terminated.

### (Step f5)

In the case of new user registration, the process proceeds to step **f6.** Otherwise, the process proceeds to step **f7**.

### (Step f6)

The user fills in a registration form as shown in FIG. **19(c)**, to acquire the user ID and password. The process then proceeds to step **f7**.

### (Step f7)

The user ID and password are entered on a user authentication screen as shown in FIG. **19(d).** After authenticated, the user enters device ID and the category of the mobile terminal to be registered. Since the device ID is managed individually for each user, any ID may be given as long as it is unique from that of any registered mobile terminal **11.**

### <Contents management of user agent>

When the mobile terminal **11** is a mobile phone and the like, the memory capacity for storing display-conditioned information is limited, and this necessitates maintenance and filtering of information.

On the side of the device agent **23,** the following maintenance may be made, for example.
1) Any information already presented to the user is deleted. The user may perform a given operation if wanting to save information.
2) Any information of which the presentation period has been expired is deleted. This deletion is performed in a predetermined cycle.
3) The user deletes any information explicitly. The user may decide deletion of given information because (a) no information is necessary today, (b) this information is unnecessary, (c) this information and related information thereof are unnecessary, and (d) any information from this provider is unnecessary, for example. Such reasons for deletion are utilized as references for the subsequent information selection.
4) The user selects a category of desired information, and higher priority is given to information belonging to the selected category. Examples of categories include a. cafes/restaurants, b. fashion, c. sundry goods, d. amusement and e. traffic information/guidance.
5) Any information stored for a time period exceeding a predetermined duration is deleted.

On the side of the user agent **22,** the following filtering operation may be made.
1) Only information related to the action area of the user is considered as an object to be acquired.
2) Any information explicitly considered unnecessary by the user is excluded.
3) Higher priority is given to the category desired by the user.
4) Higher priority is given to information of which the expiry is close.

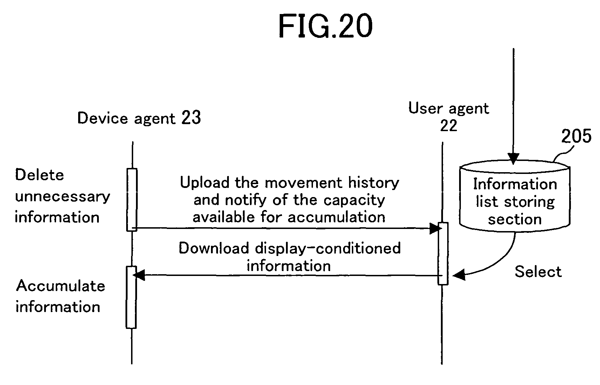

Maintenance of display-conditioned information may be made in the manner shown in FIG. **20,** for example. That is, after deleting unnecessary information, the device agent **23** notifies the user agent **22** of the memory capacity allowed for accumulation of information, at the time of uploading of the movement history. The user agent **22** narrows information to be transmitted based on the action ranges of the user and then selects information from the narrowed information so as to fit into the notified memory capacity considering the order of priority. Thereafter, the device agent **23** downloads and stores the information.

### <Information notification in liaison between terminals>

By managing movement histories acquired from a plurality of mobile terminals in a unified way as in this embodiment, information notification in liaison between the terminals can be realized. That is, by analyzing the action of the user from the movement histories, information related to a location to which the user is predicted to visit in the near future may be displayed on the terminal currently available by the user.

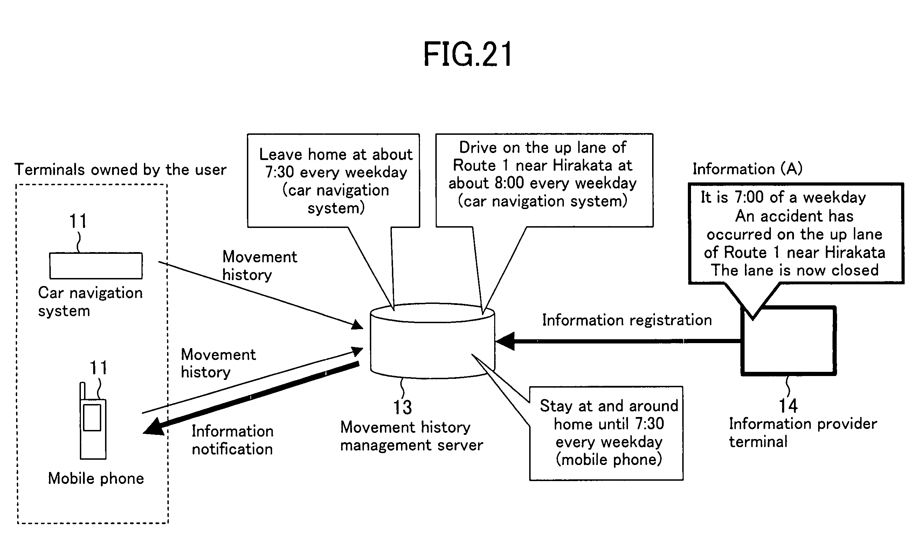

FIG. **21** shows an example of information notification in liaison between the mobile terminals. Assume that from the movement histories recorded in the movement history management server **13,** it is predicted that the user 1) stays in and around his or her house until about 7:30 every weekday (mobile phone), 2) leaves the house at about 7:30 every weekday (car navigation system), and 3) drives on the up lane of Route 1 in the vicinity of Hirakata at about 8:00 every weekday (car navigation system). Assume also that the information provider intends to distribute information (A) that an accident has occurred on the up lane of Route 1 in the vicinity of Hirakata and the lane is now closed, and that it is 7:00 of a weekday. The information provider
(1) determines that the information (A) relates to the travel route of the user from the movement history of the car navigation system of the user,
(2) determines that the user should now stay in the house judging from the current time of 7:00, and
(3) distributes the information (A) to the user's mobile phone by electronic mail. Thus, the user can be informed of the accident on his or her car travel route at home via the mobile phone.

Not only the movement histories of the mobile terminals, but also use histories of information terminals including the mobile terminals may be grasped together in a unified way, to allow information presentation in liaison among these multiple information terminals.

In the following example, note that information presented by the service concierge is provided with display conditions including at least the area condition related to the position and the timing condition indicating the timing at which the information should be presented. No area may be designated as the area condition in some cases.

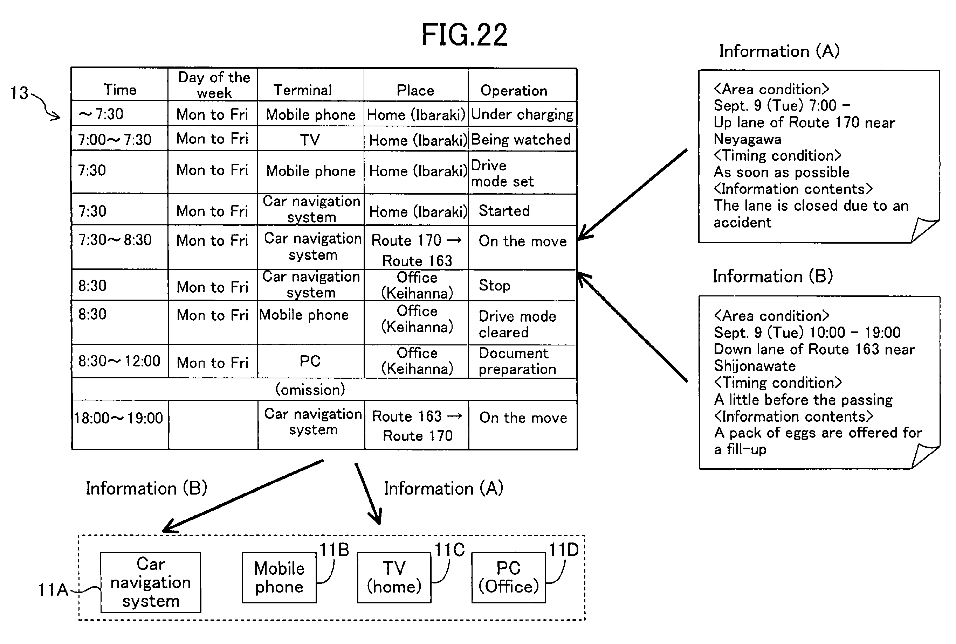

FIG. **22** shows an example of information presentation in liaison among a plurality of information terminals. In the example of FIG. **22,** assume that the user has a car navigation system **11A** and a mobile phone **11B** as the mobile terminals, as well as a TV **11C** in the house and a PC **11D** in the office as the other information terminals. Assume also that the movement history management server **13** manages the movement histories of the mobile terminals and the use histories of the information terminals together in a unified way.

Suppose display-conditioned information (A) and information (B) have been transmitted from the service concierge **25.** The information (A) is accident information that has the area condition designating the time and place when and where the road is closed and the timing condition of "as soon as possible". The information (B) is advertisement information that has the area condition designating the time and place when and where a present is offered from a store and the timing condition of "a little before the passing ".

Having the conditions described above, the information (A) is transmitted to the TV **11C** in the house of the user. The reason is that the area condition matches with the user's movement history, that the timing condition is "as soon as possible", and that it is estimated from the movement history that the user will still be watching the TV **11C** in the house at the time of reception of the information (A). On the contrary, the information (B) is transmitted to the car navigation system **11A**. The reason is that since the area condition matches with the user's movement history and the timing condition is "a little before the passing", it is presumed appropriate to transmit the information to the car navigation system **11A.**

As described above, in this example, the use histories of a plurality of information terminals are unified and managed as history information. Once display-conditioned information is transmitted, the terminal satisfying the timing condition of the information is selected with reference to the history information, and the information is presented to the selected terminal. In this way, information can be distributed in response to the user's action more accurately than conventionally done.

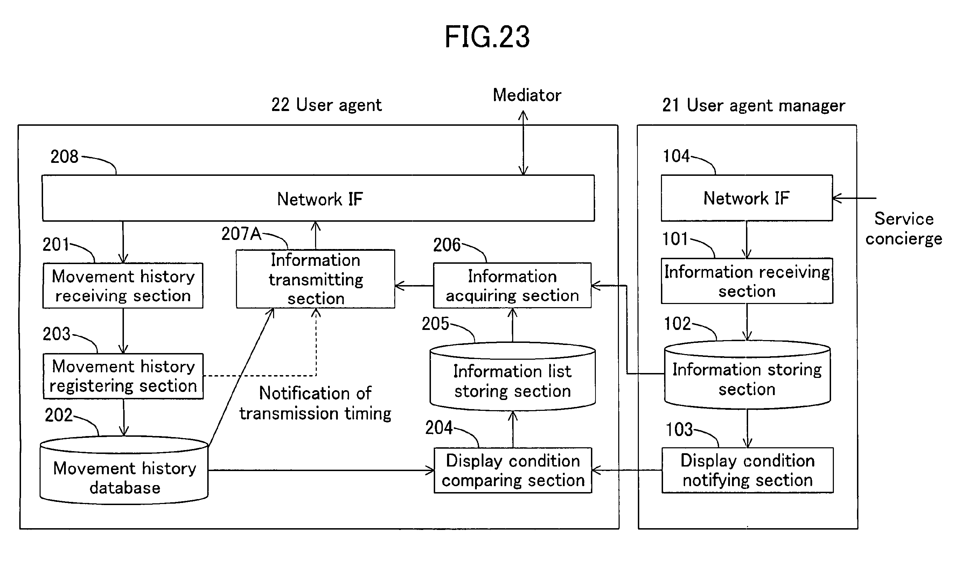

FIG. **23** is a block diagram of the user agent manager **21** and the user agent **22** of the movement history management server **13** adopted in this example. The configuration of FIG. **23** is the same as that of FIG. **3** except that an information transmitting section **207A** has a function of selecting a terminal to which information is to be transmitted with reference to the movement history database **202.** Also, in this configuration, the movement history database **202** stores therein the use histories of the information terminals, in addition to the movement histories of the mobile terminals. The history receiving section **201** and the movement history registering section **203** constitute a history managing section, and the display condition notifying section **103,** the display condition comparing section **204,** the information list storing section **205** and the information acquiring section **206** constitute an information filtering section.

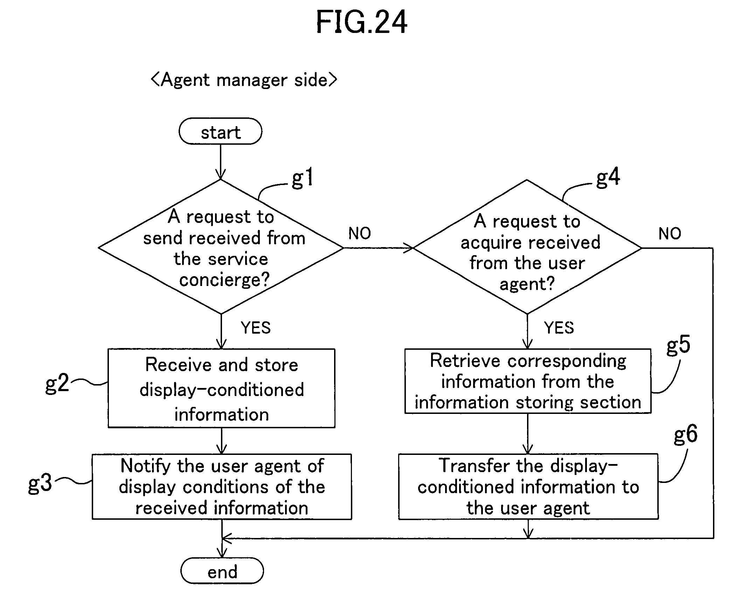

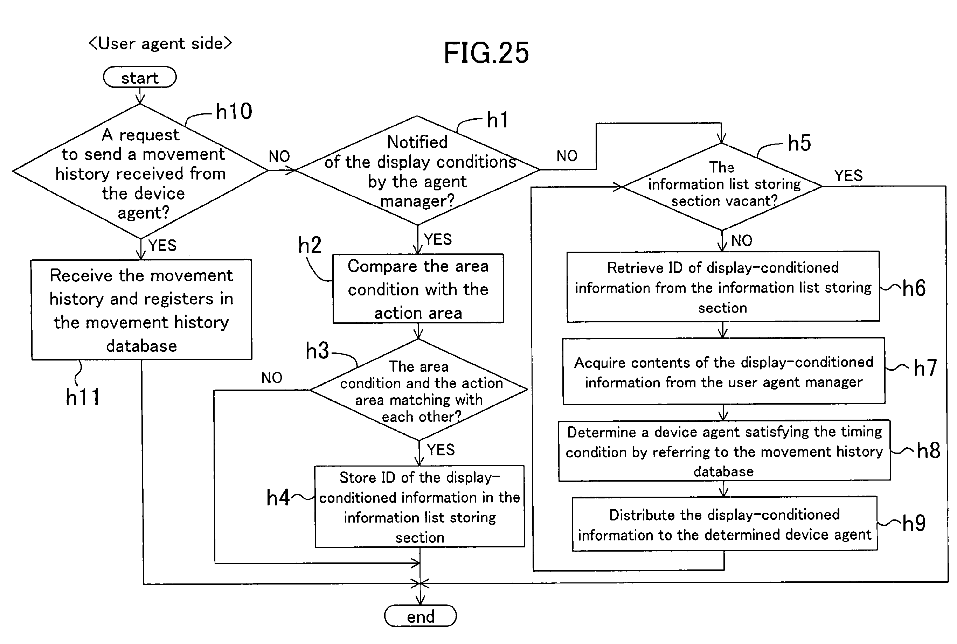

The operation of the components in FIG. **23** will be described with reference to the flowcharts of FIGS. **24** and **25**. FIG. **24** shows the operation of the agent manager **21,** and FIG. **25** shows the operation of the user agent **22.**

Referring to FIG. **24,** in the agent manager **21,** if receiving a request to send display-conditioned information from the service concierge **25** (YES in **g1),** the information receiving section **101** receives the display-conditioned information and stores the received information in the information storing section **102 (g2).** The display condition notifying section **103** notifies the user agent **22** of the display conditions given in the received display-conditioned information **(g3).**

Referring to FIG. **25,** in the user agent **22,** if being notified of the display conditions by the agent manager **21** (YES in **h1**), the display condition comparing section **204** compares the action area of the user obtained from the movement history database **202** with the area condition included in the display conditions **(h2).** If the area condition and the user's action area match with each other (YES in **h3),** the display condition comparing section **204** stores the identifier (OD) of the display-conditioned information in question in the information list storing section **205 (h4).**

In the user agent **22,** also, if the information list storing section **205** is not vacant (NO in **h5),** the information acquiring section **206** retrieves the ID of the display-conditioned information from the information list storing section **205 (h6),** and acquires the contents of the display-conditioned information from the agent manager **21 (h7).** That is, referring back to FIG. **24,** if receiving a request to acquire display-conditioned information from the user agent **22** (YES in **g4),** the agent manager **21** retrieves the display-conditioned information of the designated ID from the information storing section **102** (**g5)**, and transfers the information to the user agent **22 (g6).**

Referring back to FIG. **25,** in the user agent **22,** which has received the display-conditioned information to be distributed, the information transmitting section **207A** determines the information terminal (that is, device agent) that can satisfy the timing condition included in the display conditions with reference to the movement history database **202 (h8).** The information transmitting section **207A** then transmits the display-conditioned information in question to the determined information terminal **(h9).**

In the user agent **22,** also, if receiving a request to send the movement history from the device agent **23** (YES in **h10),** the movement history receiving section **201** receives the movement history, and the movement history registering section **203** registers the received movement history with the movement history database 202 **(h11).**

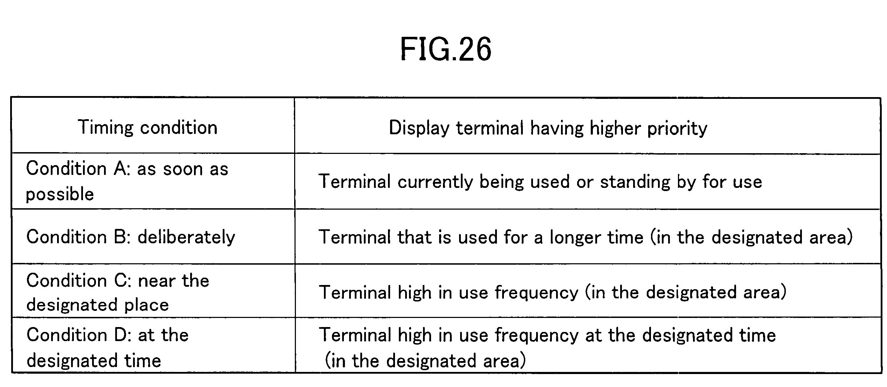

The determination of the information terminal in step **h8** will be described by giving a specific example. FIG. **26** shows an example of the rule for determining the terminal based on the timing condition. In the example of FIG. **26,** as the timing condition, four alternatives, condition A "as soon as possible", condition B "deliberately", condition C "near the designated place" and condition D "at the designated time", are shown.

When the condition A is given, higher priority is given to the terminal currently being used by the user or the terminal currently in its standby state in the selection. When the condition B is given, higher priority is given to the terminal that is used for a longer time in the area designated as the area condition. When the condition C is given, higher priority is given to the mobile terminal high in use frequency in the area designated as the area condition. When the condition D is given, higher priority is given to the terminal high in use frequency in the time of day including the designated time.

If no concrete area is specifically given as the area condition, the terminal to which higher priority should be given may be selected from the entire movement history of the user when the timing condition is B, C or D.

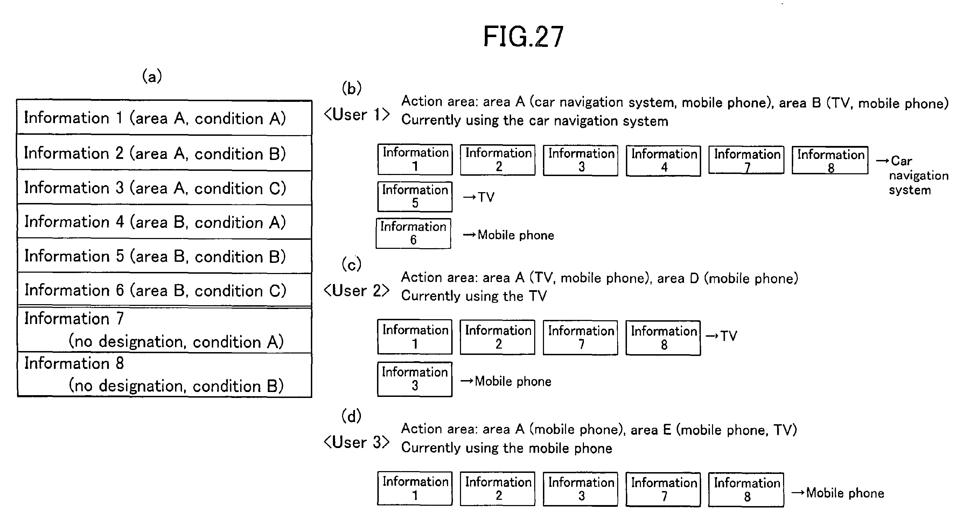

FIG. **27** shows an example of terminal selection according to the rule shown in FIG. **26.** Assume that information 1 to 8 shown in FIG. **27(a)** have been transmitted from the service concierge. In the information 1 to 3, "area A" is designated as the area condition, and the conditions A, B and C are respectively designated as the timing condition. In the information 4 to 6, "area B" is designated as the area condition, and the conditions A, B and C are respectively designated as the timing condition. In the information 7 and 8, no concrete area is specifically designated as the area condition and the conditions A and B are respectively designated as the timing condition.

As shown in FIG. **27(b),** assume that user 1 has an action area including the areas A and B, in which a car navigation system is used in the area A and a TV and a mobile phone are used in the area B, and is currently using the car navigation system. Note that the order of the terminals appearing in each of FIGS. **27(b)** to **27(d)** corresponds to the descending order of the use frequency.

All of the information 1 to 3 are transmitted to the user 1 because "area A" of the area condition matches with the action area of the user 1. The information 1, having the timing condition A "as soon as possible", is transmitted to the car navigation system the user 1 is currently using. The information 2, having the timing condition B "deliberately", is transmitted to the car navigation system as the terminal that is used for a longer time in the area A. The information 3, having the timing condition C "near the designated place", is transmitted to the car navigation system as the mobile terminal higher in use frequency in the area A.

All of the information 4 to 6 are also transmitted to the user 1 because "area B" of the area condition matches with the action area of the user 1. The information item 4, having the timing condition A "as soon as possible", is transmitted to the car navigation system the user 1 is currently using. The information 5, having the timing condition B "deliberately", is transmitted to the TV as the terminal that is used in a longer time in the area B. The information 6, having the timing condition C "near the designated place", is transmitted to the car navigation system as the mobile terminal higher in use frequency in area B.

Both the information 7 and 8, having no specific area designation, are also transmitted to the user 1. The information 7, having the timing condition A "as soon as possible", is transmitted to the car navigation system the user 1 is currently using. The information 8, having the timing condition B "deliberately", is transmitted to the car navigation system as the terminal that is used for a longer time in the entire action area of the user.

As a result, the information 1 to 4, 7 and 8 are transmitted to the car navigation system, the information 5 to the TV, and the information 6 to the mobile phone.

Likewise, as shown in FIG. **27(c)**, assume that user 2 has an action area including the areas A and D, in which a TV and a mobile phone are used in the area A and a mobile phone is used in the area D, and is currently using the TV.

All of the information 1 to 3 are transmitted to the user 2 because "area A" of the area condition matches with the action area of the user 2. The information 1, having the timing condition A "as soon as possible", is transmitted to the TV the user 2 is currently using. The information 2, having the timing condition B "deliberately", is transmitted to the TV as the terminal that is used for a longer time in the area A. The information 3, having the timing condition C "near the designated place", is transmitted to the mobile phone as the mobile terminal higher in use frequency in the area A.

None of the information 4 to 6 is transmitted to the user 2 because "area B" of the area condition does not match with the action area of the user 2.

Both the information 7 and 8, having no specific area designation, are transmitted to the user 2. The information 7, having the timing condition A "as soon as possible", is transmitted to the TV the user 2 is currently using. The information 8, having the timing condition B "deliberately", is transmitted to the TV as the terminal that is used for a longer time in the entire action area of the user.

As a result, the information 1, 2, 7 and 8 are transmitted to the TV, the information 3 to the mobile phone, and none of the information 4 to 6 is transmitted to the user 2.

Likewise, as shown in FIG. **27(d),** assume that user 3 has an action area including the areas A and E, in which a mobile phone is used in the area A and a mobile phone and a TV are used in the area E, and is currently using the mobile phone.

All of the information 1 to 3 are transmitted to the user 3 because "area A" of the area condition matches with the action area of the user 3. The information 1, having the timing condition A "as soon as possible", is transmitted to the mobile phone the user 3 is currently using. The information 2, having the timing condition B "deliberately", is transmitted to the mobile phone as the terminal that is used for a longer time in the area A. The information 3, having the timing condition C "near the designated place", is transmitted to the mobile phone as the mobile terminal higher in use frequency in the area A.

None of the information 4 to 6 is transmitted to the user 3 because "area B" of the area condition does not match with the action area of the user 3.

Both the information 7 and 8, having no specific area designation, are transmitted to the user 3. The information item 7, having the timing condition A "as soon as possible", is transmitted to the mobile phone the user 3 is currently using. The information 8, having the timing condition B "deliberately", is transmitted to the mobile phone as the terminal that is used for a longer time in the entire action area of the user 3.

As a result, the information 1 to 3, 7 and 8 are transmitted to the mobile phone, and none of the information 4 to 6 is transmitted to the user 3.

As described above, in this example, display-conditioned information obtained by narrowing based on the area condition and the user's movement history is transmitted to a terminal that satisfies the timing condition of the information. Accordingly, information high in necessity for the user can be distributed to the user at accurate timing.

Thus, according to the present invention, movement histories from a plurality of mobile terminals owned by the user are managed in a unified way at the server. This permits more accurate grasping of the user's action ranges and action pattern, and thus information high in necessity for the user can be distributed by precise narrowing of information. Also, the information provider does not have to care about to which mobile terminal of which user information should be sent, but may just give display conditions to the information, to enable distribution of the information to the user that satisfies the conditions. Moreover, information considering the current position of the user can be presented to the user at appropriate timing without the necessity of real-time communication.

## Claims

1. An information distribution device comprising:
a history managing section for receiving from a plurality of terminals owned by a user movement histories of the user and use histories of the terminals and storing the received histories in a movement history database;
an information receiving section for receiving display-conditioned information provided with display conditions including an area condition and a timing condition from an information provider and storing the received information in an information storing section;
an information filtering section for filtering the display-conditioned information stored in the information storing section by comparing an action area of the user obtained from the movement histories stored in the movement history database with the area condition, to specify display-conditioned information to be transmitted to the user; and
an information transmitting section for determining a terminal among the plurality of terminals that satisfies the timing condition of the display-conditioned information specified by the information filtering section, by referring to the use histories stored in the movement history database, and transmitting the display-conditioned information to the terminal.

2. An information distribution method comprising the steps of:
receiving from a plurality of terminals owned by a user movement histories of the user and use histories of the terminals and storing the received histories in a movement history database;
receiving display-conditioned information provided with display conditions including an area condition and a timing condition from an information provider and storing the received information in an information storing section;
filtering the display-conditioned information stored in the information storing section by comparing an action area of the user obtained from the movement histories stored in the movement history database with the area condition, to specify display-conditioned information to be transmitted to the user; and
determining a terminal among the plurality of terminals that satisfies the timing condition of the specified display-conditioned information, by referring to the use histories stored in the movement history database, and transmitting the display-conditioned information to the terminal.
